# FASCICULE DE BREVET EUROPEEN

(11) **EP 2 452 130 B1**
(45) Date de publication et mention de la délivrance du brevet: **12.08.2015**
(21) Numéro de dépôt: 10742212.3
(22) Date de dépôt: 07.07.2010
(51) Int. Cl.: F24F 13/14, F24F 11/04, F16K 1/226, F16K 1/22, F16K 1/54, F16K 1/52

(54) **CONDUIT DE SECTION GÉNÉRALE CIRCULAIRE, ÉQUIPÉ D'UN DISPOSITIF DE RÉGULATION DU DÉBIT D'AIR**
ROHR MIT KREISQUERSCHNITT UND EINEM LUFTFLUSSREGLER
PIPE OF CIRCULAR OVERALL CROSS SECTION, FITTED WITH AN AIRFLOW RATE REGULATING DEVICE

(30) Priorité: 10.07.2009 FR 0954827
(43) Date de publication de la demande: 16.05.2012
(73) Titulaire: ALDES AERAULIQUE, 69200 Vénissieux (FR)
(72) Inventeur: BUSEYNE, Serge, F-31200 Toulouse (FR); LEFEBVRE, Camille, F-81370 Saint Sulpice (FR)
(74) Mandataire: Verriest, Philippe
(86) Numéro de dépôt international: PCT/FR2010/051428
(87) Numéro de publication internationale: WO 2011/004118

(56) Documents cités:
- DE-B3-102007 019 231
- FR-A- 2 477 665
- FR-A- 2 495 798
- US-A- 5 465 756
- US-A1- 2007 218 830

## Description

L'invention concerne un conduit de section générale circulaire, équipé d'un dispositif de régulation du débit d'air.

L'invention se rapporte plus particulièrement au domaine technique des installations de ventilation mécanique Conduit de section générale circulaire, équipé d'un dispositif de régulation du débit d'air contrôlée (VMC).

Le document DE102007019231 décrit un conduit de section générale circulaire, équipé d'un dispositif de régulation du débit d'air comprenant un volet circulaire de diamètre correspondant sensiblement au diamètre interne du conduit, monté pivotant autour d'un axe sensiblement perpendiculaire à l'axe du conduit, et destiné à être actionné par l'intermédiaire d'un moteur.

Le document US2007/218830 décrit un conduit de section générale circulaire, équipé d'un dispositif de régulation du débit d'air comprenant un volet circulaire, monté pivotant autour d'un axe sensiblement perpendiculaire à l'axe du conduit, et destiné à être actionné par l'intermédiaire d'un moteur.

La ventilation des logements et des locaux tertiaires, tels que les écoles, les bureaux, permet d'améliorer la conservation du bâti, d'évacuer les pollutions spécifiques liées à la présence des occupants, au bâti lui-même ou aux matériels ou machines utilisés dans les locaux.

La maîtrise de cette ventilation est nécessaire pour limiter les déperditions thermiques liées à ce renouvellement de l'air.

A cet effet, il est connu d'installer des registres dans le réseau de ventilation. Un registre est un organe inséré dans un conduit aéraulique ou utilisé conjointement avec une bouche d'air, permettant de modifier la résistance du réseau et, par conséquent, d'ajuster le débit d'air.

Une consigne de débit étant généralement donnée, le registre a pour but de maintenir le débit de ventilation sensiblement constant et égal à la consigne.

Pour cela, dans le cas d'une installation à débit fixe, il est connu d'utiliser un registre à iris ainsi qu'une prise de pression différentielle. La position du registre est calculée en fonction de la pression différentielle, cette position étant ensuite figée. Un registre complémentaire motorisé peut être utilisé, si nécessaire, pour obturer le réseau.

Une autre solution consiste à utiliser un module de régulation pouvant être motorisé et permettant d'assurer un débit fixe sur une large plage de pression.

Dans le cas d'une installation à débit variable, il est connu d'utiliser une boîte de type V.A.V. (Variable Air Volume system), constituée d'un registre motorisé et d'une croix de mesure de débit. Son application est plutôt réservée à des installations tertiaires, au vu du coût et des débits mis en oeuvre. Le registre motorisé permet de réguler un débit choisi et mesuré par la croix. Le fonctionnement du registre est néanmoins impossible pour de faibles débits, en raison de l'imprécision de mesure de la croix.

Il est également connu d'utiliser un registre à pale, permettant de réguler le débit d'air en fonction de l'angle de la pale.

Ce type de registre présente l'inconvénient suivant.

Dans le cas où l'on souhaite obtenir un débit constant de faible valeur, l'angle de la pale doit varier dans de faibles proportions afin de maintenir le débit. En effet, l'angle de la pale doit varier uniquement de quelques degrés afin de maintenir le débit constant sur toute la plage de pression.

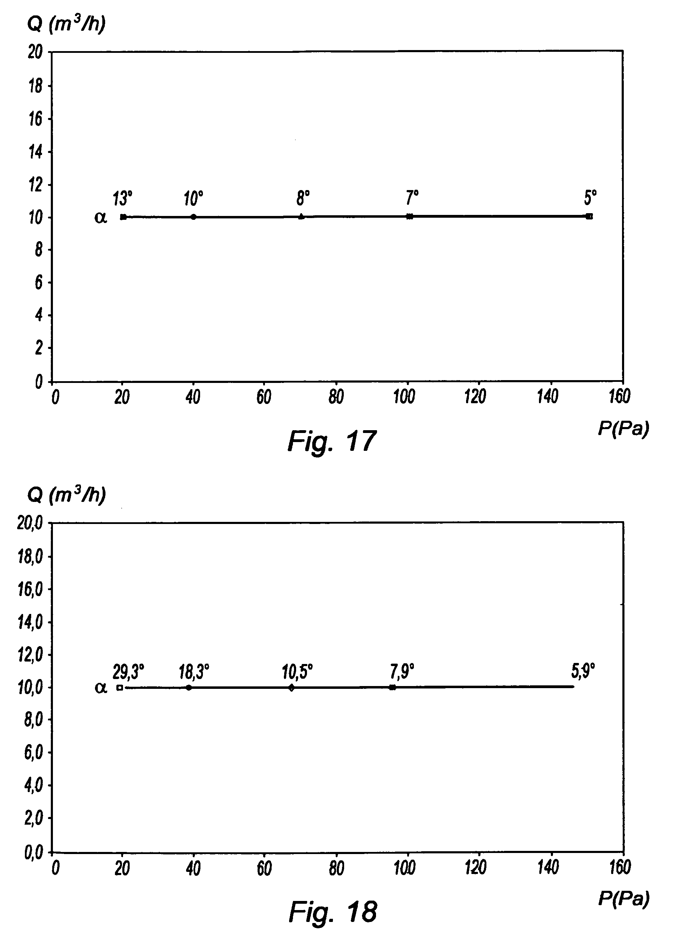

La figure 17 est un diagramme représentant le degré d'ouverture d'un registre à pâle, c'est-à-dire l'angle d'inclinaison de la pale par rapport au plan perpendiculaire à l'axe du conduit, sur une plage de pression variant de 20 à 150 Pa, le débit étant maintenu constant à une valeur de 10 m³ par heure.

Comme illustré sur cette figure, dans le cas où la pression dans le conduit est de l'ordre de 20 Pa, l'angle de la pale devra être de l'ordre de 5° et, dans le cas où la pression dans le conduit est de l'ordre de 150 Pa, l'angle de la pale devra être de l'ordre de 13°.

Les faibles variations angulaires de la pale ne permettent pas de maintenir, de façon précise, un débit constant dans le conduit. Par ailleurs, la mesure de pression est souvent difficile à réaliser car elle est perturbée par la présence du registre.

L'invention vise à remédier à ces inconvénients en proposant un conduit de section générale circulaire, équipé d'un dispositif de régulation du débit d'air, permettant de maintenir, de façon précise, un débit faible et constant dans le conduit.

A cet effet, l'invention concerne un conduit de section générale circulaire, équipé d'un dispositif de régulation du débit d'air comprenant un volet circulaire de diamètre correspondant sensiblement au diamètre interne du conduit, monté pivotant autour d'un axe sensiblement perpendiculaire à l'axe du conduit, et destiné à être actionné par l'intermédiaire d'un moteur, caractérisé en ce que le dispositif de régulation du débit d'air comporte au moins un organe de régulation comportant une paroi externe présentant une zone médiane de forme générale cylindrique en appui contre la paroi interne du conduit, de part et d'autre de laquelle sont disposées une première et une seconde zones en retrait de ladite paroi interne du conduit, de façon à ménager respectivement un premier et un second canal latéral de circulation de l'air, l'organe de régulation comportant en outre une paroi interne présentant une zone creuse conformée de façon à ce que, lors du pivotement du volet, le bord du volet affleure ou soit disposé à proximité de la paroi interne correspondante.

De cette manière, le passage d'air entre le bord du volet et la paroi interne du conduit est réduit, et s'effectue principalement au niveau des premier et second canaux latéraux formant passages, ménagés entre chaque organe de régulation et le volet. La section de passage de l'air est ainsi considérablement réduite, de sorte qu'une faible inclinaison du volet n'ouvre qu'une faible section de passage de l'air. Ainsi, pour obtenir une même section de passage, il est nécessaire d'incliner le volet de manière plus importante dans le cas de l'invention que dans le cas de la pale de l'art antérieur.

La forme des première et seconde zones en retrait, et donc des sections de passage de l'air au niveau des canaux latéraux, peut être ajustée en fonction de la plage de pression de fonctionnement auquel le conduit est soumis.

Selon une possibilité de l'invention, le dispositif de régulation du débit d'air comporte un premier et un second organes de régulation, agencés en opposition l'un par rapport à l'autre et de façon globalement symétrique par rapport à l'axe de pivotement du volet.

Selon une caractéristique de l'invention, chaque organe de régulation présente, en vue de dessus, une forme générale triangulaire ou trapézoïdale, présentant une extrémité large tournée du côté de l'axe de rotation du volet et une extrémité de plus faible largeur, tournée du côté opposé.

Selon une première forme de réalisation de l'invention, la paroi interne présente, dans la zone creuse, la forme d'une portion de sphère dont le diamètre correspond sensiblement au diamètre du volet.

Dans ce cas, aucun passage d'air n'est possible entre le bord du volet et les zones creuses des organes de régulation. Les passages d'air sont donc uniquement effectués latéralement, au niveau des canaux latéraux.

Selon une seconde forme de réalisation de l'invention, la paroi interne présente, dans la zone creuse, la forme d'une portion de sphère dont le diamètre est supérieur au diamètre du volet, le volet étant mobile entre une première position dans laquelle il s'étend sensiblement perpendiculairement à l'axe du conduit et dans laquelle le bord du volet affleure la paroi interne, et au moins une seconde position dans laquelle le bord du volet est plus écarté de la paroi interne.

De cette manière, lorsque le volet est dans la première position, aucun passage d'air n'est possible entre le bord du volet et la zone creuse. La section de passage d'air entre le bord du volet et la zone creuse augmente ensuite au fur et à mesure que volet s'incline.

Préférentiellement, chaque organe de régulation comporte un espace interne creux ainsi qu'au moins un orifice reliant l'intérieur du conduit à l'espace creux.

Selon une caractéristique de l'invention, chaque espace creux est équipé de moyens de mesure de la pression.

La mesure de la pression dans l'espace creux permet de s'assurer que la mesure n'est pas perturbée par les effets de pression dynamique et que le résultat obtenu est fiable et précis.

Avantageusement, le moteur actionnant le pivotement du volet est logé, en moins en partie, dans le volet, au niveau de l'axe de celui-ci.

Une telle structure permet de limiter l'encombrement du registre et d'assurer un entraînement efficace du volet en rotation.

Selon une possibilité de l'invention, la position du volet est calculée en fonction des mesures de pression obtenues par les moyens de mesure.

Préférentiellement, les première et seconde zones en retrait de chaque organe de régulation sont formées par des zones planes.

De toute façon l'invention sera bien comprise à l'aide de la description qui suit en référence au dessin schématique annexé représentant, à titre d'exemples non limitatifs, deux formes de réalisation de ce conduit.
Figure 1 est une vue en coupe longitudinale et en transparence du conduit ;
Figure 2 est une vue en perspective d'un organe de régulation ;
Figure 3 est une vue en coupe longitudinale, d'une partie du conduit, en position d'obturation du volet ;

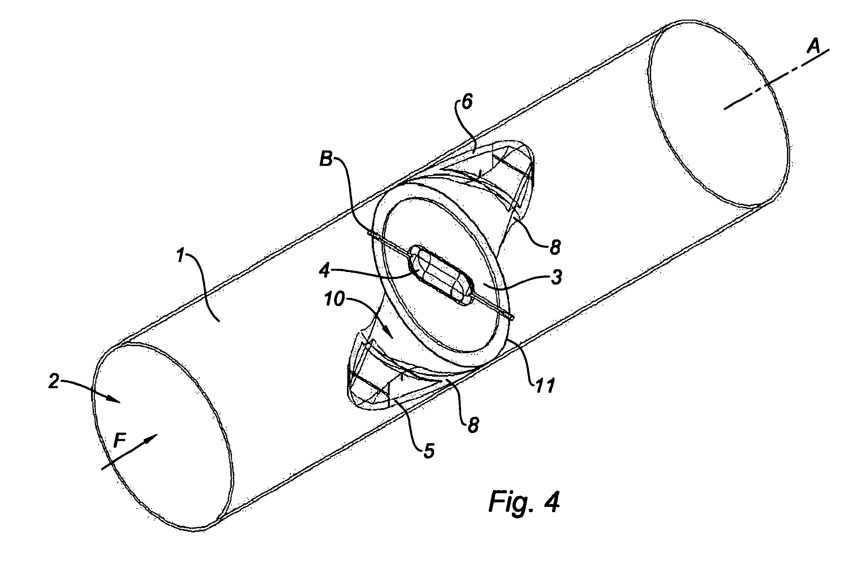

Figure 4 est une vue en perspective et en transparence du conduit, en position d'obturation du volet ;
Figure 5 est une vue correspondant à la figure 3, dans une position intermédiaire du volet ;
Figure 6 est une vue correspondant à la figure 4, en position intermédiaire du volet ;
Figure 7 est une vue illustrant la section du conduit, le volet étant en position intermédiaire ;
Figure 8 est une vue du dessus et en transparence du conduit, en position intermédiaire du volet ;
Figure 9 est une vue correspondant aux figures 3 et 5, illustrant une autre position intermédiaire du volet, dans laquelle ce dernier est plus incliné qu'à la figure 5 ;
Figure 10 et 11 sont des vues correspondant respectivement aux figures 7 et 8, le volet étant dans la position de la figure 9 ;
Figure 12 est une vue correspondant aux figures 3, 5 et 9, en position d'ouverture du volet ;
Figures 13, 14, 15 et 16 sont des vues correspondant respectivement aux figures 3, 5, 9 et 12, illustrant une variante de réalisation de l'invention ;
Figure 17 est un diagramme illustrant le degré d'ouverture d'une pale d'un registre de l'art antérieur en fonction de la pression dans te conduit ;
Figure 18 est un diagramme correspondant à celui de la figure 17, illustrant le degré d'ouverture du volet équipant le conduit selon l'invention en fonction de la pression dans le conduit ;

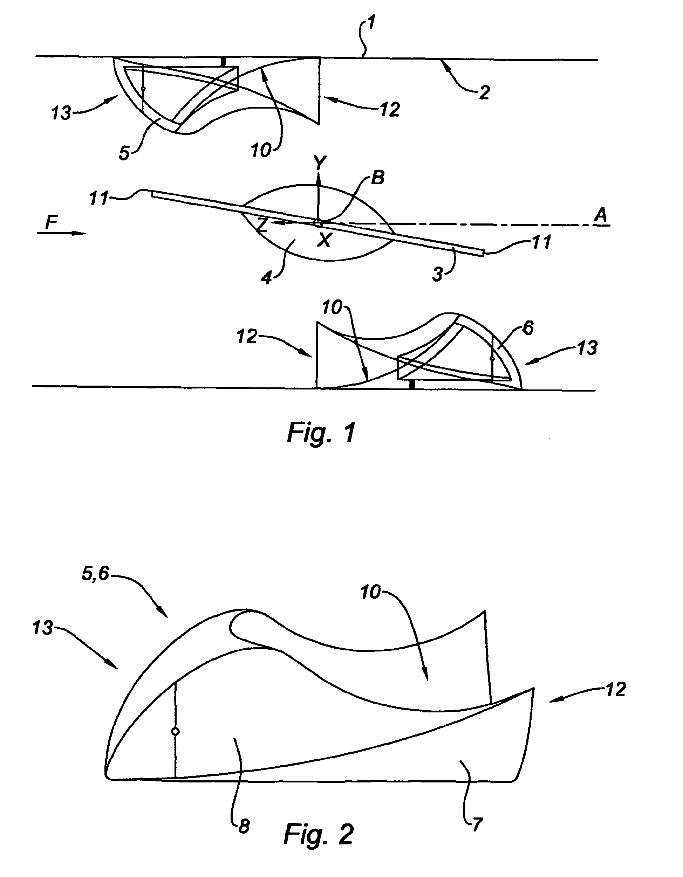

La figure 1 illustre un conduit 1 selon l'invention comportant une paroi interne 2 et une paroi externe de section cylindrique.

Celui-ci comporte un dispositif de régulation du débit d'air comprenant un volet circulaire 3 de diamètre correspondant sensiblement au diamètre interne du conduit 1, monté pivotant autour d'un axe B sensiblement perpendiculaire à l'axe A du conduit 1, et actionné par l'intermédiaire d'un moteur non représenté.

Le volet 3 comporte une zone creuse centrale 4, c'est-à-dire centrée sur l'axe B de rotation du volet 3, dans laquelle est logé le moteur.

Le dispositif de régulation du débit d'air comporte en outre un premier et un second organes de régulation 5, 6, agencés en opposition l'un par rapport à l'autre et de façon globalement symétrique par rapport à l'axe de pivotement B du volet 3.

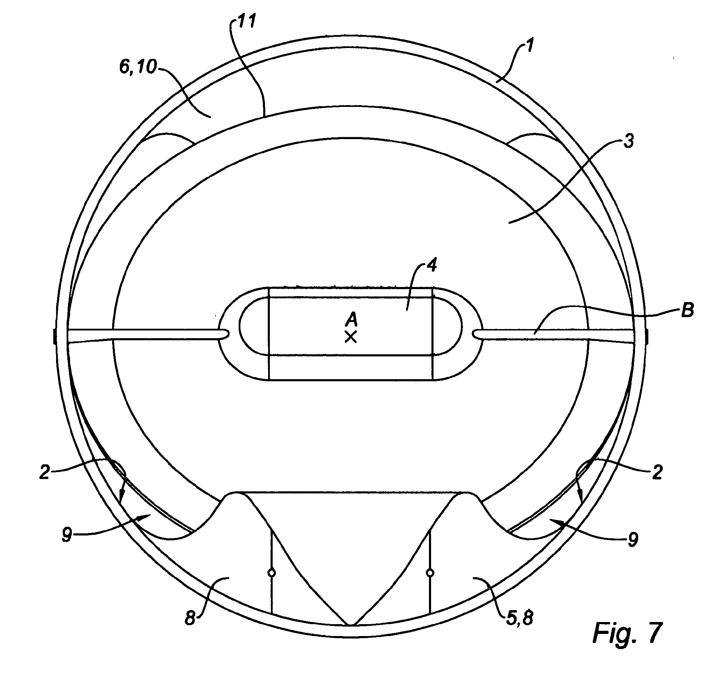

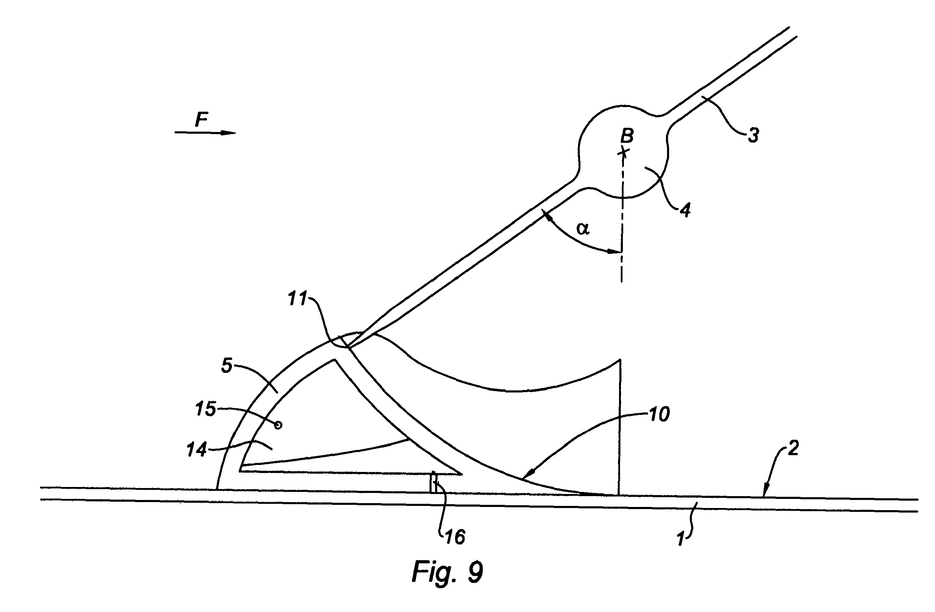

Chaque organe de régulation 5, 6 comporte une paroi externe présentant une zone médiane 7 de forme générale cylindrique en appui contre la paroi interne 2 du conduit 1, de part et d'autre de laquelle sont disposées une première et une seconde zones en retrait 8 de ladite paroi interne 2, de façon à ménager, en fonction de la position du volet 3, respectivement un premier et un second canal latéral de circulation de l'air 9 (figures 7 et 9). Chaque zone en retrait 8 est formée par une zone plane.

Chaque organe de régulation 5, 6 comporte en outre une paroi interne 10 présentant la forme d'une portion de sphère dont le diamètre correspond sensiblement au diamètre du volet 3 et formant une zone creuse. La zone creuse 10 est ainsi conformée de façon à ce que, lors du pivotement du volet 3, le bord 11 du volet 3 affleure la paroi interne correspondante 10.

Chaque organe de régulation 5, 6 présente, en vue de dessus, une forme générale triangulaire ou trapézoïdale, présentant une extrémité large 12 tournée du côté de l'axe B de rotation du volet 3 et une extrémité 13 de plus faible largeur, tournée du côté opposé (figures 1 à 3).

Chaque organe de régulation 5, 6 comporte de plus un espace interne creux 14 ainsi qu'un ou plusieurs orifices 15 reliant l'intérieur du conduit 1 à l'espace creux 14. Chaque espace creux 14 est équipé d'un capteur de pression 16.

Le sens de circulation de l'air dans le conduit est illustré par la flèche F à la figure 1. Le capteur 16 du premier organe de régulation 5 permet ainsi de mesurer la pression dite statique en amont du volet 3, le capteur 16 du second organe de régulation 6 permettant de mesurer la pression statique en aval du volet 3.

Le dispositif de régulation est en outre équipé de moyens de consignes permettant à un opérateur ou à un système automatisé de régler le débit d'air souhaité lors du fonctionnement de l'installation VMC.

Le dispositif de régulation comporte également des moyens de régulation conçus pour calculer la position angulaire α du volet 3 à obtenir en fonction de la consigne imposée et des mesures de pression obtenues.

Le fonctionnement de l'invention est le suivant.

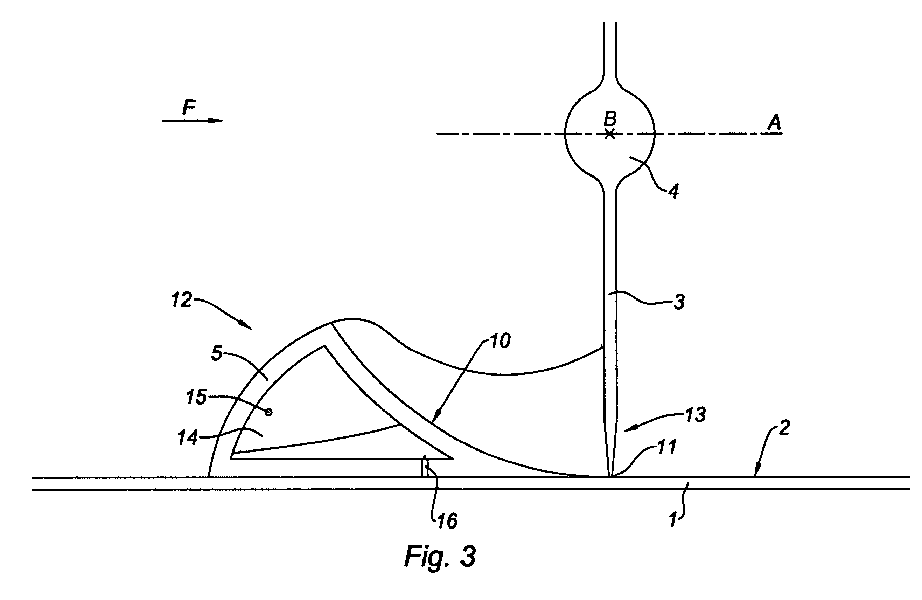

Lorsqu'il est nécessaire d'obturer le conduit, le volet 3 est placé dans sa position représentée à la figure 3. Dans cette position, le volet 3 s'étend perpendiculairement à l'axe A du conduit 1.

La position et la forme des zones latérales en retrait 8 sont adaptées de manière à ce que, dans cette position, l'ensemble du conduit 1 soit obturé par le volet 3.

En fonctionnement, le dispositif de régulation a pour objectif d'adapter la position du volet 3 de manière à obtenir un débit constant, et cela, quelle que soit la pression dans le conduit.

Le diagramme de la figure 18 illustre le cas où la consigne est de maintenir un débit constant à 10 m³ par heure.

Pour cela, dans le cas d'une pression importante, de l'ordre de 150 Pa, le degré d'ouverture du volet 3 doit être faible, de l'ordre de 6°. On rappelle que le degré d'ouverture est l'angle d'inclinaison α du volet 3 vis-à-vis du pan perpendiculaire à l'axe A du conduit 1.

En outre, dans le cas où la pression est de l'ordre de 70 Pa, le degré d'ouverture du volet doit être plus important, de l'ordre de 11°.

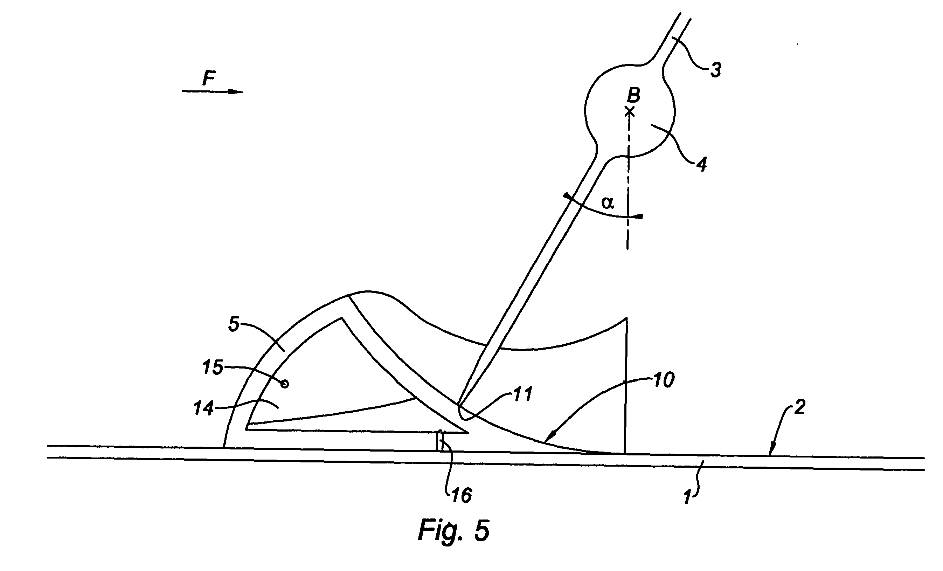

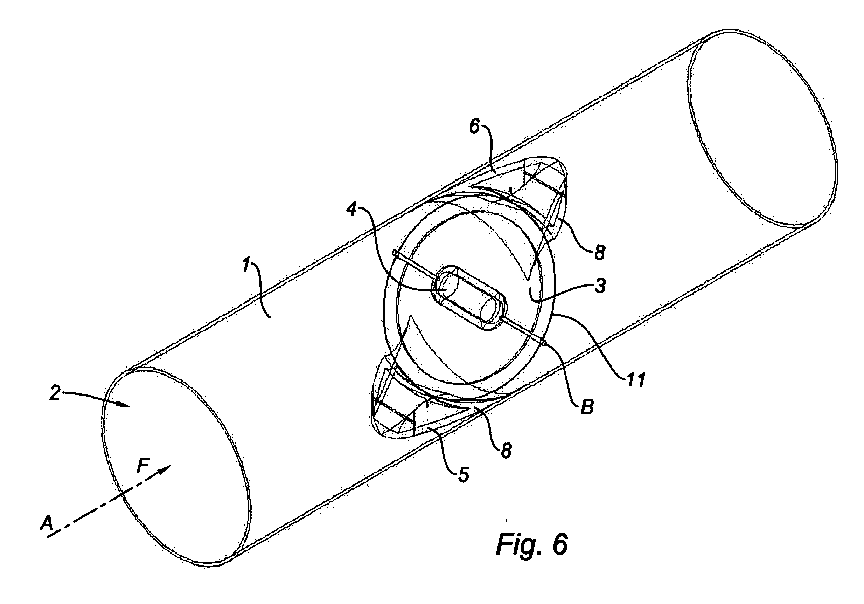

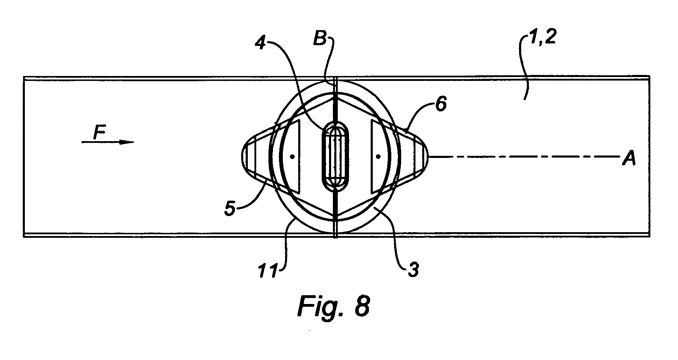

Cette position du volet est illustrée aux figures 5 à 8. Sur ces figures, l'inclinaison du volet 3 a été volontairement exagérée afin de faciliter la compréhension.

Dans cette position, le passage de l'air ne peut pas s'effectuer entre le bord 11 du volet 3 et la zone creuse 10. Le passage de l'air s'effectue uniquement au niveau des canaux latéraux 9 et, pour partie, latéralement entre le bord du volet 11 et la paroi interne 2 du conduit 1. Dans cette position, la section de passage de l'air au niveau des canaux latéraux 9 formés par les zones en retrait 8 est faible.

Lorsque la pression à l'intérieur du conduit 1 est encore plus faible, de l'ordre de 20 Pa, le degré d'ouverture du volet 3 doit être plus important, de l'ordre de 29°.

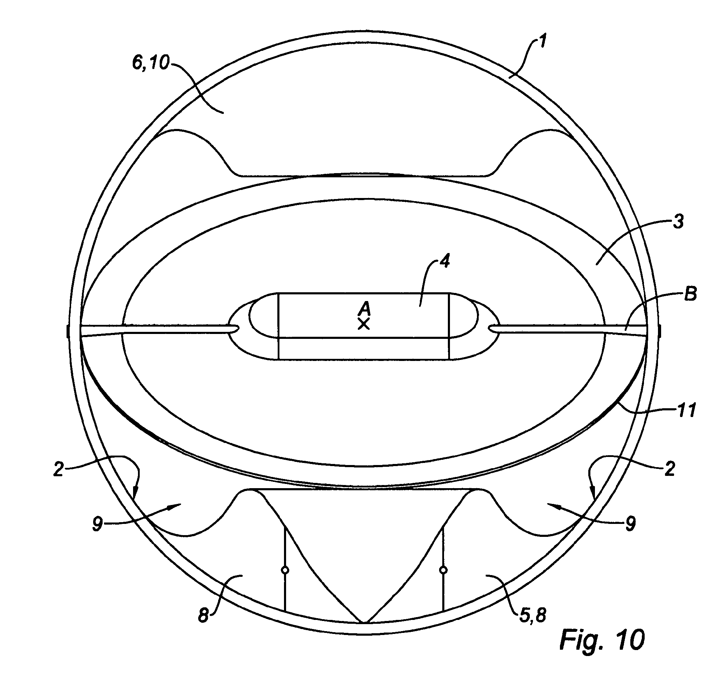

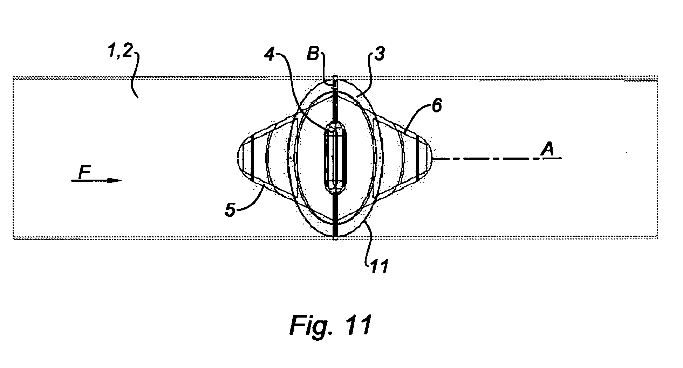

Cette position du volet 3 est illustrée aux figures 9 à 11. De même que précédemment, l'inclinaison du volet 3 a été volontairement exagérée sur ces figures afin de faciliter la compréhension.

De même que précédemment, dans cette position, le passage de l'air ne peut pas s'effectuer entre le bord 11 du volet 3 et la zone creuse 10. Le passage de l'air s'effectue uniquement au niveau des canaux latéraux 9 et, pour partie, entre le bord 11 du volet 3 et la paroi interne 2 du conduit 1. Dans cette position, la section de passage de l'air au niveau des canaux latéraux 9 formés par les zones en retrait 8 est plus importante que précédemment.

Lorsque la pression dans le conduit 1 chute encore, il est alors nécessaire de réaliser une grande section de passage de l'air. Pour cela, le degré d'ouverture du volet 3 est encore augmenté.

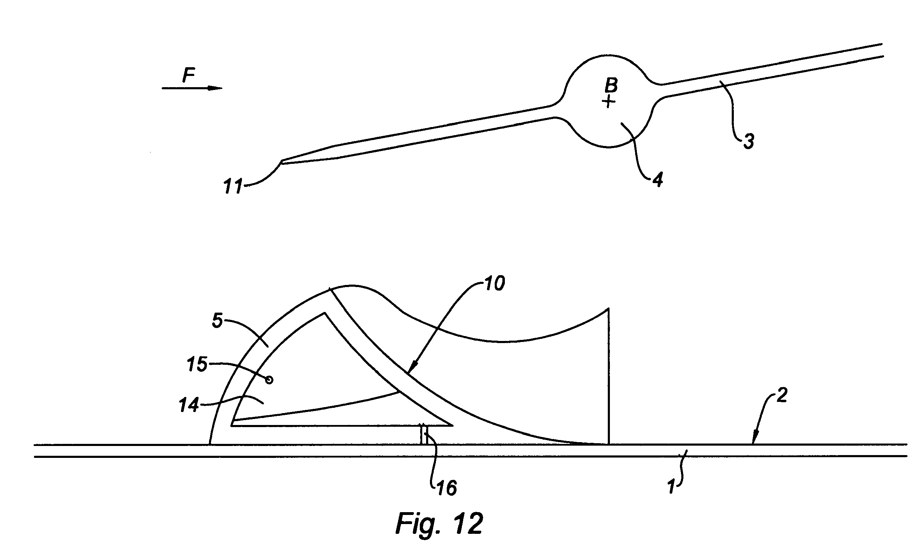

Le bord du volet 11 dépasse alors la zone creuse 10, comme cela est illustré à la figure 12, ce qui augmente brusquement la section de passage de l'air.

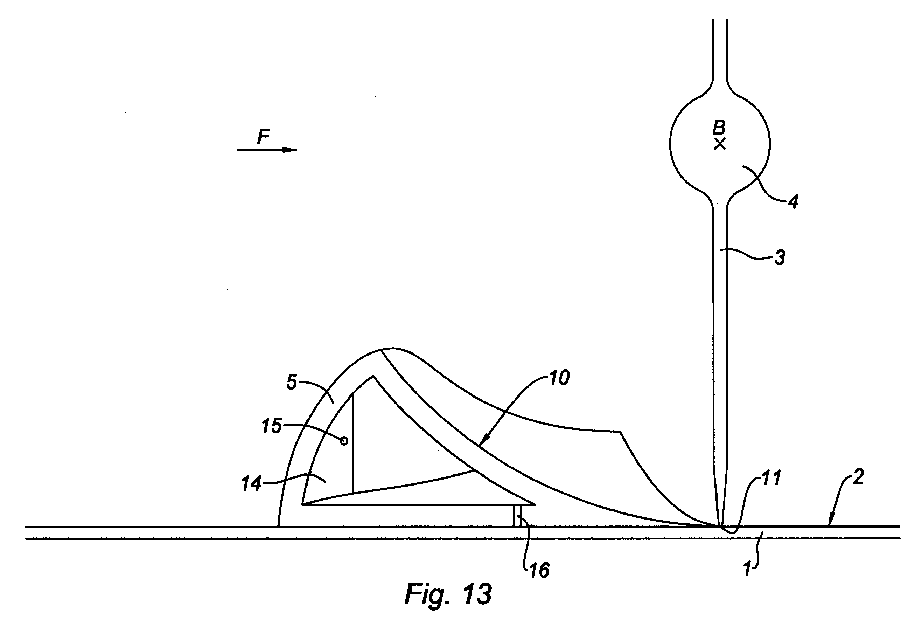

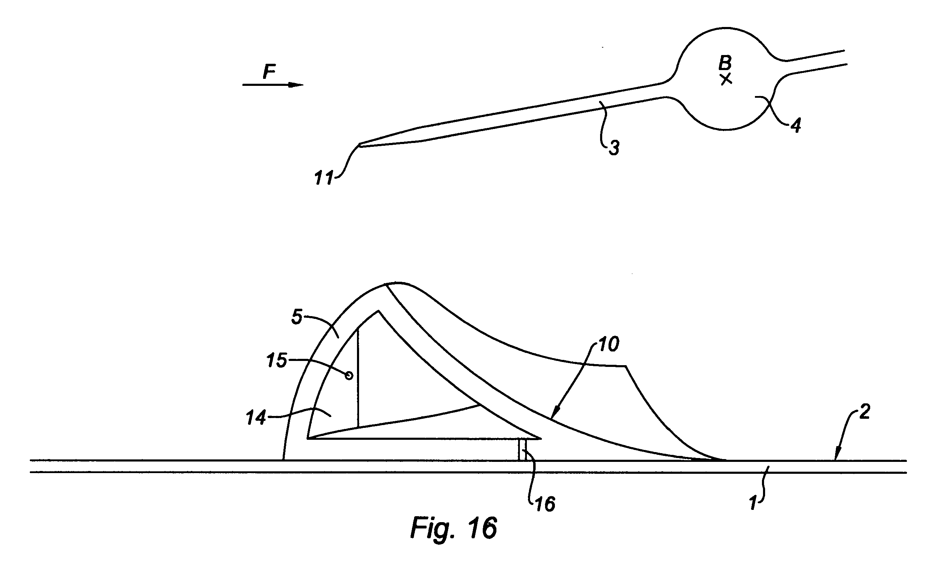

Les figures 13 à 16 illustrent une variante de réalisation de l'invention dans laquelle la paroi interne 10 présente, dans la zone creuse, la forme d'une portion de sphère dont le diamètre est supérieur au diamètre du volet 3.

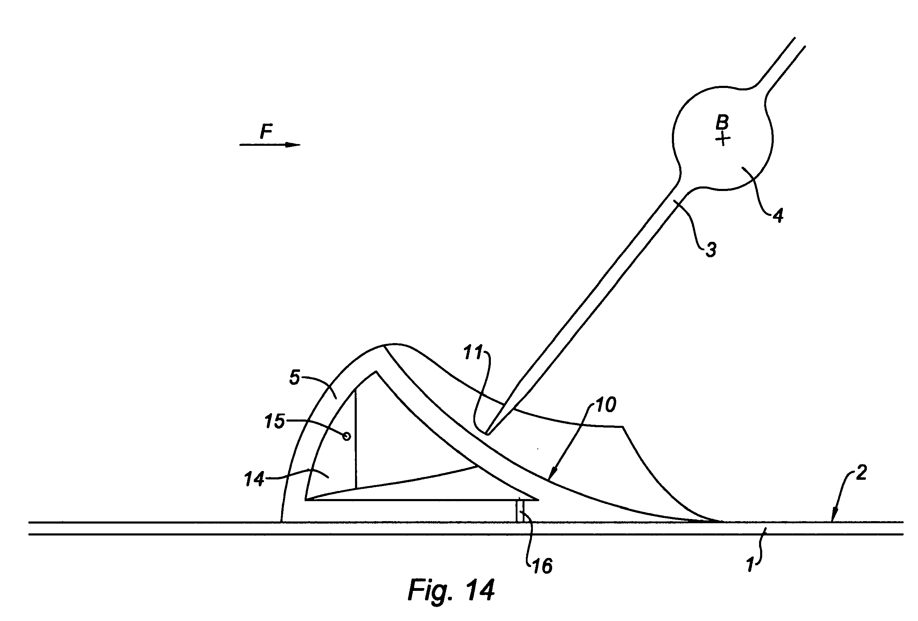

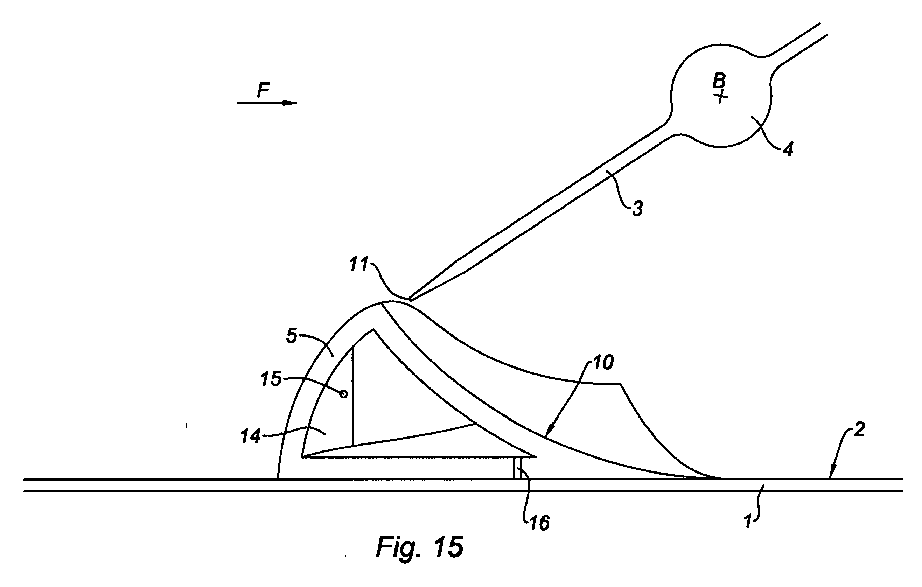

Le volet 3 est mobile entre une première position dans laquelle il s'étend sensiblement perpendiculairement à l'axe A du conduit 1 et dans laquelle le bord 11 du volet 3 affleure la paroi interne 10 (figure 13), et au moins une seconde position dans laquelle le bord 11 du volet 3 est plus écarté de la paroi interne 10 (figures 14, 15).

Le fonctionnement est similaire à celui décrit précédemment. Toutefois, dans ce cas, lors du pivotement du volet 3, le bord 11 de ce dernier s'écarte progressivement de la paroi interne 10 de la zone creuse, de sorte que l'air peut s'écouler entre le bord 11 du volet 3 et la zone creuse 10. La section de passage correspondante augmente progressivement, au fur et à mesure que le degré d'ouverture du volet 3 augmente.

Comme il va de soi, l'invention ne se limite pas aux seules formes d'exécution de ce conduit, décrites ci-dessus à titre d'exemples, mais elle embrasse au contraire toutes les variantes. C'est ainsi notamment que le dispositif de régulation du débit d'air pourrait comporter un seul organe de régulation ou encore un premier et un second organes de régulation présentant des formes différentes, dépendantes du sens d'écoulement de l'air.

## Revendications

1. Conduit (1) de section générale circulaire, équipé d'un dispositif de régulation du débit d'air comprenant un volet (3) circulaire de diamètre correspondant sensiblement au diamètre interne du conduit (1), monté pivotant autour d'un axe (B) sensiblement perpendiculaire à l'axe (A) du conduit, et destiné à être actionné par l'intermédiaire d'un moteur, **caractérisé en ce que** le dispositif de régulation du débit d'air comporte au moins un organe de régulation (5, 6) comportant une paroi externe présentant une zone médiane (7) de forme générale cylindrique en appui contre la paroi interne (2) du conduit (1), de part et d'autre de laquelle sont disposées une première et une seconde zones (8) en retrait de ladite paroi interne (2) du conduit (1), de façon à ménager respectivement un premier et un second canal latéral de circulation de l'air (9), l'organe de régulation (5, 6) comportant en outre une paroi interne (10) présentant une zone creuse conformée de façon à ce que, lors du pivotement du volet (3), le bord (11) du volet (3) affleure ou soit disposé à proximité de la paroi interne correspondante (10).

2. Conduit selon la revendication 1, **caractérisé en ce que** le dispositif de régulation du débit d'air comporte un premier et un second organes de régulation (5, 6), agencés en opposition l'un par rapport à l'autre et de façon globalement symétrique par rapport à l'axe de pivotement (B) du volet (3).

3. Conduit selon l'une des revendications 1 ou 2, **caractérisé en ce que** chaque organe de régulation (5, 6) présente, en vue de dessus, une forme générale triangulaire ou trapézoïdale, présentant une extrémité large (12) tournée du côté de l'axe (B) de rotation du volet (3) et une extrémité de plus faible largeur (13), tournée du côté opposé.

4. Conduit selon la revendication 1 à 3, **caractérisé en ce que** la paroi interne (10) présente, dans la zone creuse, la forme d'une portion de sphère dont le diamètre correspond sensiblement au diamètre du volet (3).

5. Conduit selon la revendication 1 à 3, **caractérisé en ce que** la paroi interne (10) présente, dans la zone creuse, la forme d'une portion de sphère dont le diamètre est supérieur au diamètre du volet (3), le volet (3) étant mobile entre une première position dans laquelle il s'étend sensiblement perpendiculairement à l'axe (A) du conduit (1) et dans laquelle le bord (11) du volet (3) affleure la paroi interne (10), et au moins une seconde position dans laquelle le bord (11) du volet (3) est plus écarté de la paroi interne (10).

6. Conduit selon l'une des revendications 1 à 5, **caractérisé en ce que** chaque organe de régulation (5, 6) comporte un espace interne creux (14) ainsi qu'au moins un orifice (15) reliant l'intérieur du conduit (1) à l'espace creux (14).

7. Conduit selon la revendication 6, **caractérisé en ce que** chaque espace creux (14) est équipé de moyens de mesure de la pression (16).

8. Conduit selon l'une des revendications 1 à 7, **caractérisé en ce que** le moteur actionnant le pivotement du volet (3) est logé, en moins en partie, dans le volet (3), au niveau de l'axe (B) de celui-ci.

9. Conduit selon l'une des revendications 7 ou 8, **caractérisé en ce que** la position (α) du volet (3) est calculée en fonction des mesures de pression obtenues par les moyens de mesure (16).

10. Conduit selon l'une des revendications 1 à 9, **caractérisé en ce que** les première et seconde zones en retrait (8) de chaque organe de régulation (5,6) sont formées par des zones planes.

## Patentansprüche

1. Kanal (1) mit einem allgemein kreisrunden Querschnitt, der mit einer Vorrichtung zur Regelung des Luftdurchsatzes ausgestattet ist, eine kreisrunde Klappe (3) in einem Durchmesser umfassend, der in etwa dem Innendurchmesser des Kanals (1) entspricht, die um eine Achse (B) schwenkbar montiert ist, die in etwa senkrecht zur Achse (A) des Kanals verläuft, und dazu bestimmt ist, über einen Motor betätigt zu werden, **dadurch gekennzeichnet, dass** die Vorrichtung zur Regelung des Luftdurchsatzes zumindest ein Regelungsorgan (5, 6) umfasst, das eine Außenwand umfasst, die einen Mittelbereich (7) in einer allgemein zylindrischen Form an der Innenwand (2) des Kanals (1) anliegend aufweist, wobei beiderseits davon ein erster und ein zweiter Bereich (8) angeordnet sind, die von der besagten Innenwand (2) des Kanals (1) zurückgezogen sind, um jeweils einen ersten und einen zweiten Seitenkanal für die Luftzirkulation (9) zu bilden, wobei das Regelungsorgan (5, 6) darüber hinaus eine Innenwand (10) umfasst, die einen hohlen Bereich aufweist, der derart ausgeformt ist, dass der Rand (11) der Klappe (3) beim Schwenken der Klappe (3) die entsprechende Innenwand (10) leicht berührt oder sich in der Nähe derselben anordnet.

2. Kanal nach Anspruch 1, **dadurch gekennzeichnet, dass** die Vorrichtung zur Regelung des Luftdurchsatzes ein erstes und ein zweites Regelungsorgan (5, 6) umfasst, die jeweils einander gegenüber, und im Allgemeinen symmetrisch zur Schwenkachse (B) der Kappe (3) angeordnet sind.

3. Kanal nach einem der Ansprüche 1 oder 2, **dadurch gekennzeichnet, dass** jedes Regelungsorgan (5, 6) in der Draufsicht eine allgemein dreieckige oder trapezförmige Form aufweist, die ein breites Ende (12) aufweist, das zur Seite der Achse (B) zum Drehen der Klappe (3) gewandt, und ein Ende mit einer geringeren Breite (13), das zur gegenüber liegenden Seite gewandt ist.

4. Kanal nach Anspruch 1 bis 3, **dadurch gekennzeichnet, dass** die Innenwand (10) im hohlen Bereich die Form einer Kugelabschnitts aufweist, dessen Durchmesser in etwa dem Durchmesser der Klappe (3) entspricht.

5. Kanal nach Anspruch 1 bis 3, **dadurch gekennzeichnet, dass** die Innenwand (10) im hohlen Bereich die Form einer Kugelabschnitts aufweist, dessen Durchmesser größer ist, als der Durchmesser der Klappe (3), wobei die Klappe (3) zwischen einer ersten Position, in der sie sich in etwa senkrecht zur Achse (A) des Kanals (1) erstreckt, und in der der Rand (11) der Klappe (3) die Innenwand (10) leicht berührt, und zumindest einer zweiten Position beweglich ist, in der der Rand (11) der Klappe (3) weiter von der Innenwand (10) entfernt ist.

6. Kanal nach einem der Ansprüche 1 bis 5, **dadurch gekennzeichnet, dass** jedes Regelungsorgan (5, 6) einen inneren Hohlraum (14), sowie zumindest eine Öffnung (15) umfasst, die das Innere des Kanals (1) mit dem Hohlraum (14) verbindet.

7. Kanal nach Anspruch 6, **dadurch gekennzeichnet, dass** jeder Hohlraum (14) mit Mitteln zum Messen des Drucks (16) ausgestattet ist.

8. Kanal nach einem der Ansprüche 1 bis 7, **dadurch gekennzeichnet, dass** der Motor, der die Schwenkbewegung der Klappe (3) ansteuert, zumindest teilweise in der Klappe (3) im Bereich der Achse (B) derselben eingebaut ist.

9. Kanal nach einem der Ansprüche 7 oder 8, **dadurch gekennzeichnet, dass** die Position (α) der Klappe (3) in Abhängigkeit von den Druckmesswerten berechnet wird, die man anhand der Messmittel (16) erhält.

10. Kanal nach einem der Ansprüche 1 bis 9, **dadurch gekennzeichnet, dass** der erste und der zweite zurückgezogene Bereich (8) eines jeden Regelungsorgans (5, 6) durch ebene Bereiche gebildet werden.

## Claims

1. A duct (1) with a generally circular section, equipped with a device for regulating the air flow rate comprising a circular flap (3) with a diameter substantially corresponding to the inner diameter of the duct (1), pivotally mounted about an axis (B) substantially perpendicular to the axis (A) of the duct, and intended to be actuated by means of a motor, **characterized in that** the device for regulating the air flow rate includes at least one regulating member (5, 6) including an outer wall having a middle area (7) with a generally cylindrical form bearing against the inner wall (2) of the duct (1), on either side of which are disposed first and second areas (8) set back from said inner wall (2) of the duct (1), so as to respectively arrange a first and a second lateral channel for conveying air (9), the regulating member (5, 6) further including an inner wall (10) having a hollow area shaped so that, when the flap (3) pivots, the edge (11) of the flap (3) is flush with or is disposed in the vicinity of the corresponding inner wall (10).

2. The duct according to claim 1, **characterized in that** the device for regulating the air flow rate includes first and second regulating members (5, 6), arranged opposite each other and generally symmetrically with respect to the pivot axis (B) of the flap (3).

3. The duct according to any of claims 1 or 2, **characterized in that** each regulating member (5, 6) has, when viewed from the top, a generally triangular or trapezoidal form, having a wide end (12) directed towards the axis (B) of rotation of the flap (3) and a less wide end (13), directed to the opposite side.

4. The duct according to claim 1 to 3, **characterized in that** the inner wall (10) has, in the hollow area, the form of a sphere portion the diameter of which substantially corresponds to the diameter of the flap (3).

5. The duct according to claim 1 to 3, **characterized in that** the inner wall (10) has, in the hollow area, the form of a sphere portion the diameter of which is larger than the diameter of the flap (3), the flap (3) being movable between a first position where it extends substantially perpendicular to the axis (A) of the duct (1) and where the edge (11) of the flap (3) is flush with the inner wall (10), and at least a second position where the edge (11) of the flap (3) is further away from the inner wall (10).

6. The duct according to any of claims 1 to 5, **characterized in that** each regulating member (5, 6) includes a hollow inner space (14) as well as at least one orifice (15) connecting the inside of the duct (1) with the hollow space (14).

7. The duct according to claim 6, **characterized in that** each hollow space (14) is equipped with means for measuring the pressure (16).

8. The duct according to any of claims 1 to 7, **characterized in that** the motor that actuates the pivoting of the flap (3) is housed, at least in part, in the flap (3), at the axis (B) of this latter.

9. The duct according to any of claims 7 or 8, **characterized in that** the position (α) of the flap (3) is calculated based on the pressure measurements obtained by the measuring means (16).

10. The duct according to any of claims 1 to 9, **characterized in that** the first and second set back areas (8) of each regulating member (5, 6) are formed by planar areas.
